Europäisches Patentamt

European Patent Office

Office européen des brevets

(11) Publication number: **0 277 667**
**A1**

## (12) EUROPEAN PATENT APPLICATION

(21) Application number: 88200026.8

(22) Date of filing: 11.01.88

(51) Int. Cl.⁴: **B65D 90/20** , A01C 15/00

(30) Priority: **19.01.87 NL 8700117**

(43) Date of publication of application:
**10.08.88 Bulletin 88/32**

(84) Designated Contracting States:
**AT BE CH DE ES FR GB GR IT LI LU NL SE**

(71) Applicant: **Nationale Coöperatieve Aan- en
Verkoopvereniging voor Land- en Tuinbouw
B.A. Cebeco Handelsraad
Blaak 31
NL-3011 GA Rotterdam(NL)**

(72) Inventor: **Brouwer, Louwerens Jacobus
Lijsterbeslaan 83
NL-3053 NJ Rotterdam(NL)**

(74) Representative: **Konings, Lucien Marie
Cornelis Joseph et al
OCTROOIBUREAU ARNOLD & SIEDSMA
Sweelinckplein 1
NL-2517 GK Den Haag(NL)**

(54) **Displaceable silo.**

(57) The silo comprises a frame which can be folded together and which is to be anchored to the ground, said frame consisting of legs, the upper ends of which are mutually connected for pivoting, while the holder consists of a sack.

FIG.1

EP 0 277 667 A1

## DISPLACEABLE SILO

The invention relates to a displaceable silo according to the preamble of claim 1.

Such a silo is known from DE-A-1586645. The frame thereby consists of tubes which are mutually connected for release by means of angle pieces, so that the silo can always be set up and disassembled at each required location. The assembly and disassembly operations involved in the case of this silo are inconvenient, especially when it is of considerable dimensions. The invention has for its object to reduce and/or facilitate the assembly and disassembly work involved in the displacing of a silo. This is particularly important when a silo is often set up temporarily, for example in a field to be processed.

The invention provides a silo as according to claim 1. This silo can be laid on the ground and then be pivoted upward whereby at the same time the legs are folded out. The displaceable silo is of light construction and is nevertheless very usable without there being any danger of it being blown over by strong wind, since the frame is preferably anchored to the ground with ground anchors. This silo does not require a concrete foundation and can be arranged at random locations on the land.

The holder may consist of a large sack of at least 2 cubic metres, and preferably of 3 cubic metres.

Mentioned and other features of the invention will be elucidated in the description following hereinafter with reference to a drawing.

In the drawing:

Figure 1 shows a perspective view of a silo according to the invention and;

figures 2, 3 and 4 show on a larger scale details II, III and IV respectively.

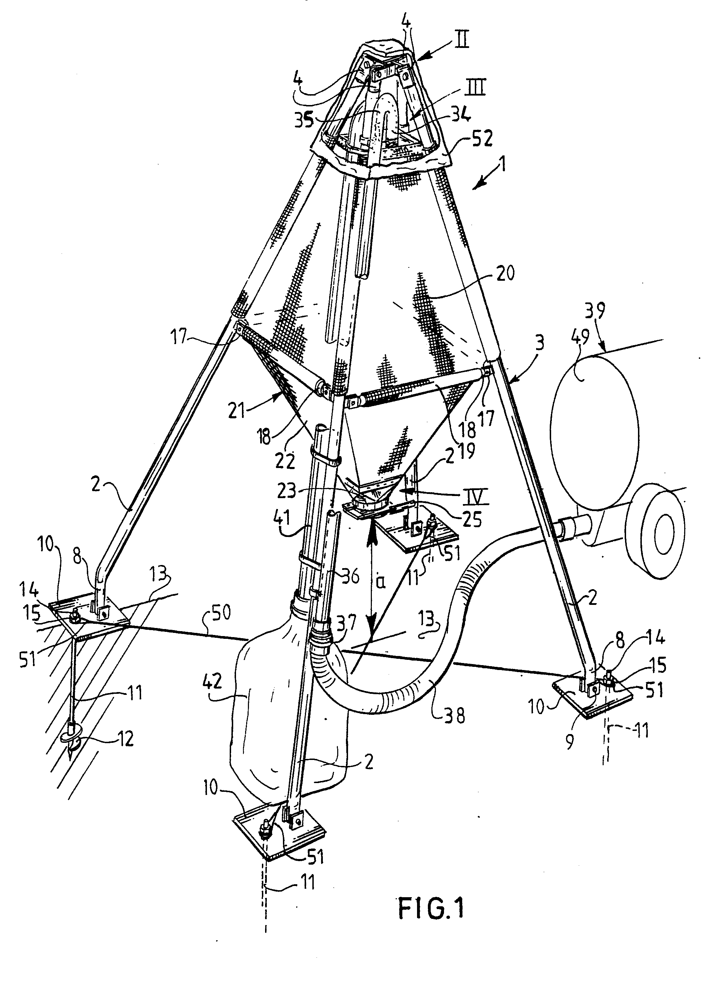

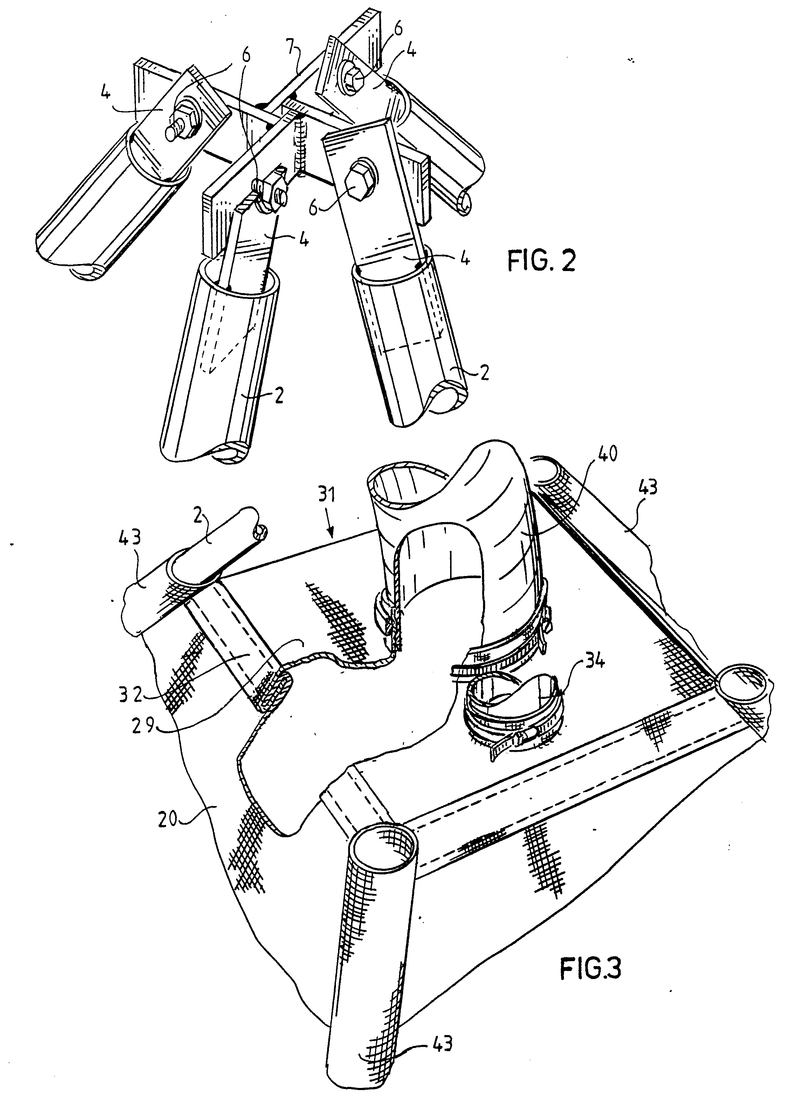

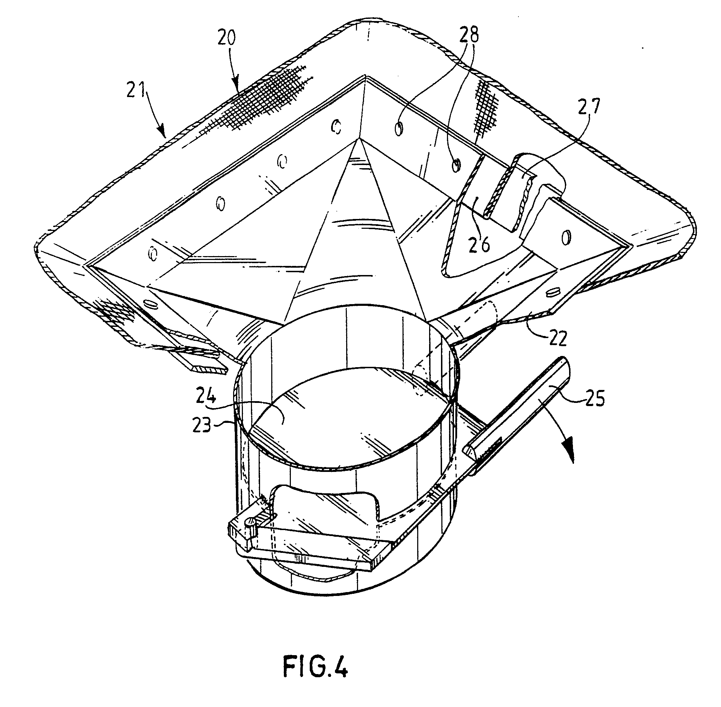

The silo 1 from figures 1-4 comprises a frame 3 with four legs 2, the upper ends 4 of which are located close to one another and are connected to one another in that they are connected for pivoting and for release to a cross piece 7 by means of bolts 6. The bottom ends 8 of legs 2 are connected by means of bolts 9 for pivoting to base-plates 10 which have such a large surface, for example 30 x 30 cm, that they can support a substantial weight of the stock of material and of silo 1 on rather soft ground, such as is found on grassland or arable land. Each base-plate 10 is provided with a ground anchor 11 with a ground screw 12 for rotating into the ground 13. A screw head 14 runs through base-plate 10 carries a nut 15. Gripping round each ground anchor 11 is a loop 51 of a cross wire 50, with which in soft ground the distance of the legs 2 from one another is ensured. Between the ends the legs 2 have fastening lips 17 for the releasable fastening thereto of shores 18, each of which are inserted through a supporting seam 19 of a sack 20. The sack 20 in face consists substantially of two quadrilateral pyramids joined at supporting seams 19 by means of two shores 18 to be arranged in each case. The two other shores 18 can remain in position permanently.

Sack 20 is substantially supported by shores 18. To this end, the rib seams 43 of the sack 20 through which legs 2 are inserted, have clearance such that the sack can easily slide downward along legs 2 until it hangs mainly on shores 18.

The lower part 21 of sack 20 consists of a funnel 22 with a material discharge 23 provided with a valve 24 to be operated by means of a handle 25. The level $a$ of discharge 23 above the ground 13 is of a height such that an agricultural tractor with a container for the spreading of material, for example an artificial fertilizer spreader, can drive beneath it between legs 2 and such that the container of this spreader located beneath it can be filled directly from discharge 23. Sack 20 has a bottom edge 26, which is folded over and clamped between funnel 22 and a square outer ring 27 fastened to funnel 22 with fastening means 28. The upper part 29 of sack 20 has stitched on sleeve pieces 32 and 33. Sleeve piece 32 is clamped round a material inlet 34, which connects via a bend 35 to a riser pipe 36 with a coupling end 37 for connection to a hose 38 of a pneumatic unloading system of a bulk road vehicle 39 which has a bulk tank 49. Sleeve piece 33 is clamped around an air outlet 40 connecting to an air outlet pipe 41, on which can be suspended a filter bag 42 for the collection of dust residues. This silo 1 can be easily moved in folded state and can easily be arranged at any random location on arable land or meadow or in a farmyard. A contractor who has to spread fertilizer for various clients can always carry silo 1 from one piece of land to another. A farmer can use silo 1 for different purposes, and may if required erect it on his land for the temporary storage of bulk material, for example cattle feed or cereal. Being a displaceable element, silo 1 is also usable for temporary storage of building material, for example sand or gravel, although the strength of sack 20 then needs to be adapted to this heavy material.

Sack 20 has a volume for example of 2 to 4 cubic metres, and preferably of 3 cubic metres. Silo 1 is well anchored against blowing over by ground anchors 11. Sack 20 is manufactured for example of sheets of PVC with glass reinforcement. The seams can be stitched or sealed on. Sack 20 is watertight at the top as a result of the inset piece 31. It is also possible according to the invention to erect a silo on farm land with substantial base-plates and ground anchors, thus gaining the important advantage of a costly foundation not being necessary. Preferably present at the top end is a hood 52 of flexible, watertight material.

## Claims

1. Displaceable silo (1) comprising an anchored frame (3) and a sack (20) carried by said frame (3), **characterized in that** said frame (3) consists of at least three, and preferably four, legs (2), of which the upper ends (4) located close to one another are mutually connected, this such that said frame (3) can be folded together.

2. Silo (1) as claimed in claim 1, **characterized in that** the legs (2) are mutually connected by means of shores (18) and that the sack (20) is suspended on said shores by means of supporting arms (19).

3. Silo (1) as claimed in claim 1 or 2, **characterized in that** the sack (20) is provided with seams (43) for accommodation of legs (2) of the frame (3).

4. Silo (1) as claimed in any of the claims 1-3, **characterized in that** the sack (20) has an outlet (23) at a level $\underline{a}$ above the ground (13) such that said outlet (23) can discharge into a container of an agricultural vehicle.

5. Silo (1) as claimed in any of the foregoing claims, **characterized in that** the frame (3) is anchored to the ground (13) with ground anchors (11).

6. Silo (1) as claimed in any of the foregoing claims, **characterized in that** the sack (20) has a content of at least 2 cubic metres.

FIG.1

FIG. 2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 158 807 (ARNEY) <br> * Page 2, lines 5-130; page 3, lines 1-81; figures 1-9 * <br> --- | 1,2,5,6 | B 65 D 90/20 <br> A 01 C 15/00 |
| A | FR-A-2 583 720 (PAPETERIE DE L'EST) <br> * Page 3, lines 20-37; pages 4,5; figures 1,2,3 * <br> --- | 2,3 | |
| A | FR-A-2 395 206 (WALRAVE) <br> * Page 3, lines 18-40; pages 4,5; figures 1-9 * <br> --- | 1,2,3,4 ,6 | |
| A | FR-A-1 509 039 (MALGRANGE) <br> * Page 1, right-hand column; page 2, left-hand column; figures 1,2 <br> --- | 2,3,6 | |
| A | FR-A-2 406 582 (CO. FRANCAISE DE L'AZOTE COFAZ) <br> * Pages 1,2,4,6; figures 1,9,10,12 * <br> ----- | 4,5,6 | |
| | | | **TECHNICAL FIELDS SEARCHED (Int. Cl.4)** <br><br> B 65 D <br> A 01 C |

The present search report has been drawn up for all claims

| Place of search | Date of completion of the search | Examiner |
|---|---|---|
| THE HAGUE | 14-04-1988 | VERMANDER R.H. |

EPO FORM 1503 03.82 (P0401)